# EUROPÄISCHE PATENTSCHRIFT

(11) **EP 2 309 293 B1**
(45) Veröffentlichungstag und Bekanntmachung des Hinweises auf die Patenterteilung: **28.12.2011**
(21) Anmeldenummer: 09012847.1
(22) Anmeldetag: 10.10.2009
(51) Int. Cl.: G02B 6/35, G01S 7/481, G01S 17/89, H04N 1/12, G02B 26/10

(54) **Faseroptischer Scanner**
Fibre optic scanner
Scanner à fibre optique

(43) Veröffentlichungstag der Anmeldung: 13.04.2011
(73) Patentinhaber: EADS Deutschland GmbH, 85521 Ottobrunn (DE)
(72) Erfinder: Schwanke, Ulrich, 88677 Markdorf (DE)
(74) Vertreter: Meel, Thomas

(56) Entgegenhaltungen:
- DE-A1- 1 931 273
- DE-A1- 3 332 909
- DE-A1- 3 942 770
- DE-C1- 3 942 771
- GB-A- 1 008 337
- US-A- 3 325 594
- SCHNADT A K ET AL: "UNIQUE AIRBORNE FIBER SCANNER TECHNIQUE FOR APPLICATION-ORIENTED LIDAR PRODUCTS" 3. Oktober 2004 (2004-10-03), INTERNATIONAL ARCHIVES OF PHOTOGRAMMETRY, REMOTE SENSING AND SPATIAL INFORMATION SCIENCES, INTERNATIONAL SOCIETY FOR PHOTOGRAMMETRY AND REMOTE SENSING, GB, PAGE(S) 19 - 23 , XP007904856 ISSN: 1682-1750 * Zusammenfassung; Abbildung 1 *

## Beschreibung

Die Erfindung betrifft einen faseroptischen Scanner nach dem Oberbegriff des Patentanspruchs 1 sowie eine Entfernungsbildkamera (in der Literatur auch als 3D-Laserradar bezeichnet), in dem ein solcher faseroptischer Scanner zur Anwendung kommt.

Faseroptische Scanner sind optomechanische Geräte, die zur Führung und Ablenkung von Lichtsignalen dienen. Bei einem faseroptischen Zeilenscanner kann z.B. die auf eine Zeile fallende Lichtinformation in eine Folge von Lichtpulsen in einer Glasfaser umgewandelt werden.

Zur Erzeugung von 3D-Laserradarbildern ist der Einsatz eines faseroptischen Zeilenscanners mit biaxialem optischem Sende- und Empfangssystem bekannt (DE 39 42 770 C1, DE 39 42 771 C1). Der faseroptische Scanner der bekannten Systeme umfasst getrennt voneinander einen Sendeteil zum Aussenden von Laserlicht sowie einen symmetrisch dazu ausgebildeten Empfangsteil zum Empfang des an der Szene reflektierten Lichts. Sendeteil und Empfangsteil umfassen jeweils eine Array aus einer Mehrzahl von Lichtleitern, deren erste Enden zeilenförmig angeordnet sind, und deren zweite Enden ringförmig angeordnet sind. Die zweiten Enden eines jeden Arrays bilden somit eine ringförmige Struktur, in deren Zentrum sich das Ende eines zentralen Lichtleiters befindet. Der zentrale Lichtleiter ist beim Sendeteil mit einer Lichtquelle verbunden und beim Empfangsteil mit einem Detektor. Außerdem ist für Sendeteil und Empfangsteil jeweils ein gegen seine Rotationsachse gekippter, motorgetriebener Drehspiegel vorhanden. Dieser ist derart ausgerichtet, dass im Sendeteil das aus dem zentralen Lichtleiter austretende Laserlicht der Reihe nach auf die kreisförmig angeordneten Enden des Lichtleiterarrays gelenkt wird. Umgekehrt wird im Empfangsteil beim Empfang des hereinkommenden Lichts das aus den Enden des kreisförmigen Arrays austretende Licht in den zentralen Lichtleiter geleitet.

In der DE 33 32 909 A1 ist eine Anordnung zum Beleuchten eines Informationsträgers offenbart, wobei ein Array von Lichtleitern vorhanden ist, deren erste Enden oberhalb des zu beleuchtenden Informationsträgers angeordnet sind, und deren zweite Enden kreisförmig angeordnet sind. Des Weiteren ist ein einzelner Lichtleiter vorhanden, der auf einem rotierenden Träger angeordnet ist und dessen erstes Ende auf der Rotationsachse des Trägers angeordnet ist. Sein zweites Ende ist exzentrisch zur Rotationsachse angeordnet, und zwar derart, dass bei der Rotation des Trägers Licht sequentiell zwischen dem rotierenden Lichtleiter und den Lichtleitern des Arrays übergehen kann. Die Lichtleitfasern werden sowohl zur Zuleitung des Lichts auf den Informationsträger als auch zur Ableitung des von beleuchteten Stellen des Informationsträgers ausgehenden Lichts eingesetzt. Vor dem ersten Ende des rotierenden Lichtleiters befindet sich ein Geräteaufsatz, der eine zentrale Bohrung aufweist, durch die hindurch das Eingangssignal einer Lichtquelle in den rotierenden Lichtleiter eintreten kann. Die Bohrung ist von den Enden weiterer Lichtleiter umgeben, über die das von dem Informationsträger ausgehende Licht nach Durchlaufen des Arrays von Lichtleitern sowie des rotierenden Lichtleiters zu Auswerteeinrichtungen geführt wird.

Um ein 3D-Laserradar kostengünstiger bauen zu können ist es erforderlich, die Anzahl von, in der Regel sehr kostspieligen, optischen Komponenten zu reduzieren.

Der Erfindung liegt die Aufgabe zugrunde, den bekannten faseroptischen Scanner so zu modifizieren, dass der Aufwand für die benötigten optischen Komponenten wesentlich verringert wird. Vorteilhafte Ausführungen des faseroptischen Scanners sowie eine Entfernungsbildkamera, die auf einem solchen faseroptischen Scanner basiert, sind Gegenstände weiterer Ansprüche.

Der erfindungsgemäße Scanner zeichnet sich dadurch aus, dass er als koaxiales System ausgebildet ist. Dies bedeutet, dass die Trennung in Sendeoptik und Empfangsoptik aufgehoben ist. Vielmehr ist nur noch eine Optik vorhanden, die abwechselnd sowohl zum Senden als auch zum Empfangen der Lasersignale verwendet wird.

Die Zahl der verwendeten optischen Elemente im Strahlengang sinkt somit dramatisch, ebenso wie die Herstellkosten des Systems. Darüber hinaus kann mit diesem erfindungsgemäßen Aufbau das Volumen des Gesamtgerätes stark verkleinert werden.

Die koaxiale Sende/Empfangssystem wird dadurch realisiert, dass der zentrale Lichtleiter (der nun - anders als beim Stand der Technik - nur noch einmal vorhanden ist), in zwei koaxiale Querschnittsbereiche aufgeteilt ist, wobei durch den zentralen Querschnittsbereich das Sendelicht geleitet wird, und durch den äußeren Querschnittsbereich das Empfangslicht geleitet wird.

Mit der Erfindung sind insbesondere die folgenden Vorteile verbunden:
- Vereinfachung der bisherigen biaxialen Laserradare durch Reduktion der Anzahl von optischen Komponenten, verbunden mit einer Komprimierung der Baugröße und des Gewichtes des Gesamtgerätes.
- Reduktion der Fertigungskosten.
- Die Funktionalität des Systems in Abhängigkeit von der Temperatur wird unkritischer.
- Es ist eine kompaktere, flexiblere Bauweise der Optikeinheit möglich.
- Die Aufwendige Justierung der Optikeinheit entfällt.

Die Erfindung wird anhand konkreter Ausführungsbeispiele unter Bezugnahme auf Figuren näher erläutert. Es zeigen:
- Fig. 1: eine erste Ausführung des erfindungsgemäßen koaxialen Faserscanners;
- Fig. 2: einen Querschnitt des zentralen Lichtleiters, mit seiner Aufteilung in zwei koaxiale Querschnittsbereiche für Senden und Empfang;
- Fig. 3 bis 5: drei verschiedene Ausführungen zur Realisierung eines faseroptischen Kopplers zur Trennung der Querschnittsbereiche für Senden und Empfang des zentralen Lichtleiters;
- Fig. 6: eine zweite Ausführung des erfindungsgemäßen koaxialen Faserscanners mit einem schnellen optischen Schalter zum Schutz des optischen Detektors;
- Fig. 7: die Ausführung des optischen Frontends einer Entfernungsbildkamera, die einen erfindungsgemäßen Faserscanner umfasst.

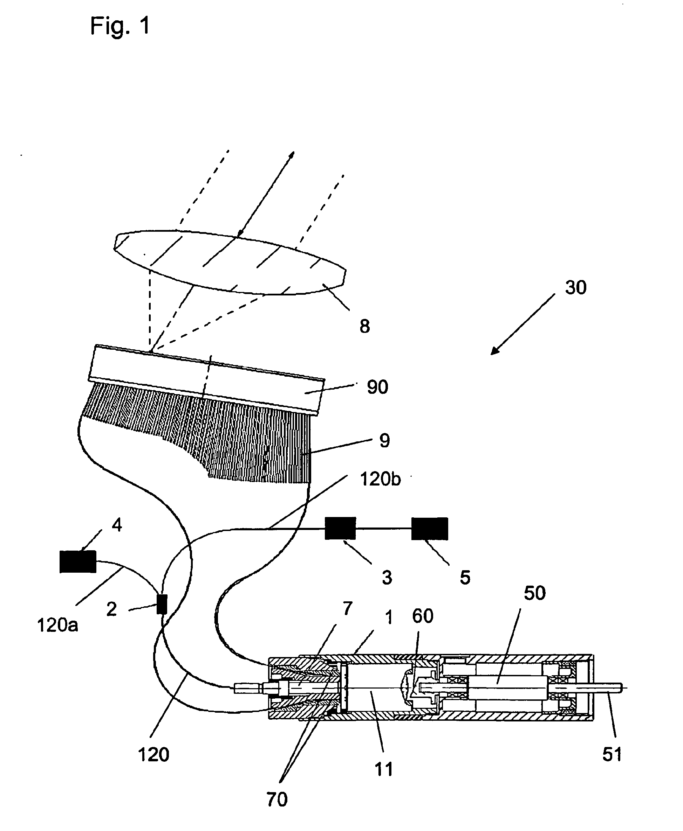

Fig. 1 zeigt eine erste Ausführung des erfindungsgemäßen koaxialen Faserscanners. Es umfasst ein Array 9 einzelner Lichtleiter. Bei der in Fig.1 dargestellten Ausführung des Faserscanners handelt es sich um einen Zeilenscanner, d.h. die einen Enden 90 der Fasern des Faserarrays 9 sind zeilenförmig angeordnet. Die Anordnung dieser Faserenden kann jedoch je nach konkretem Anwendungsfall beliebig sein, z.B. als Doppelzeile, gekrümmte Zeile, in Kreuz- oder Kreisform oder als 2-dimensionales Array oder in einer sonstigen freien Konfiguration.

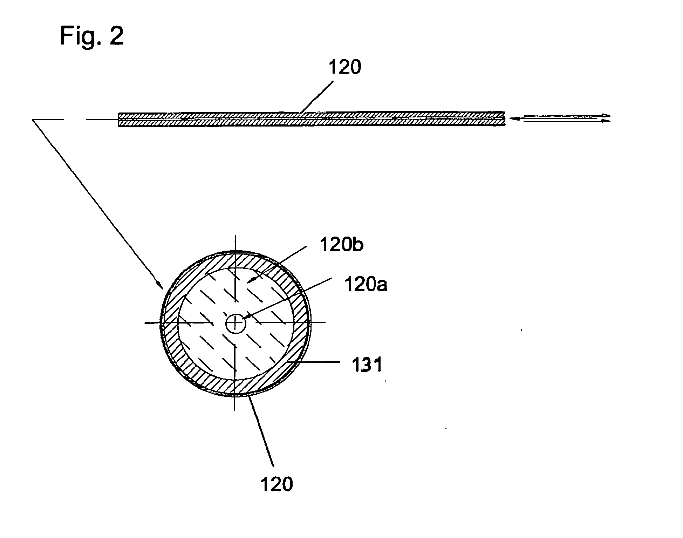

Die zweiten Enden 70 der Fasern des Arrays 9 sind kreisförmig innerhalb des Zentralteils 1 des Faserscanners angeordnet. Die zeilenförmig angeordneten Enden 90 sind in der Brennebene eines Objektivs 8 angeordnet. Im Zentrum der kreisförmig angeordneten Enden 70 ist ein Ende des zentralen Lichtleiters 120 mit Hilfe eines Steckers 7 fixiert. Der zentrale Lichtleiter 120 ist in zwei koaxiale Querschnittsbereiche 120a, 120b für Senden und Empfang aufgespalten (Fig. 2). Die Aufspaltung des zentralen Lichtleiters 120 in seine beiden koaxialen Querschnittsbereiche 120a,120b erfolgt an einem faseroptischen Koppler 2, so dass der zentrale Querschnittsbereich 120a für das Aussenden von Licht mit einer Lichtquelle 4, z.B. einer gepulsten Laserdiode oder einem Faserlaser, verbunden werden kann und der äußere Querschnittsbereich 120b für den Lichtempfang mit einem Detektor 5 verbunden werden kann. Bezugsziffer 131 der Fig. 2 bezeichnet einen äußeren Schutzmantel des Lichtleiters 120.

Gegenüber dem Ende der zentralen Lichtleitfaser 120 ist ein Reflektor, hier ausgebildet als Drehspiegel 60, vorhanden, der auf der Achse 51 eines Antriebs 50, z.B. einem Elektromotor, angeordnet ist. Der Drehspiegel ist gegenüber seiner Drehachse verkippt. Der Antrieb für den Drehspiegel 60 ist im Zentralteil 1 des Faserscanners angeordnet. Im Sendebetrieb des faseroptischen Scanners werden die aus der zentralen Faser 120 austretenden Lichtpulse nach Durchlaufen der Optik 11 durch den Drehspiegel 60 nacheinander auf die kreisförmig angeordneten Enden 70 des Lichtleiterarrays 9 gelenkt und in die entsprechenden Fasern eingekoppelt. Die Synchronisierung von Lichtquelle 4 und Drehspiegel 60 kann über einen Markendetektor erfolgen, wie z.B. in der DE 39 42 771 C1 beschrieben. Das eingekoppelte Licht verlässt den Faserscanner an den zeilenförmigen Enden 90 des Faserarrays über das Objektiv 8.

Im Empfangsbetrieb verläufe der Lichtweg in die umgekehrte Richtung. Das an den zeilenförmig angeordneten Enden 90 eingekoppelte Licht (in Falle eines Laserradars das an der Szene reflektierte Licht des Lichtquelle) verlässt die Lichtleiter des Arrays 9 an den kreisförmig angeordneten Enden 70 und fällt auf den Drehspiegel 60. Nacheinander werden die aus den einzelnen Lichtleitern des Arrays 9 austretenden Lichtsignale vom Drehspiegel auf das Ende des zentralen Lichtleiters 120 gelenkt. Aufgrund der endlichen Zeitdauer zwischen Aussenden des Lichtsignals und Empfang des reflektierten Signals, innerhalb der sich der Drehspiegel weiterdreht, wird das empfangene Lichtsignal auf den äußeren, ringförmigen Querschnittsbereich 120b des zentralen Lichtleiters 120 gelenkt. Von dort läuft das Licht durch den faseroptischen Koppler 2 hindurch auf den Detektor 5.

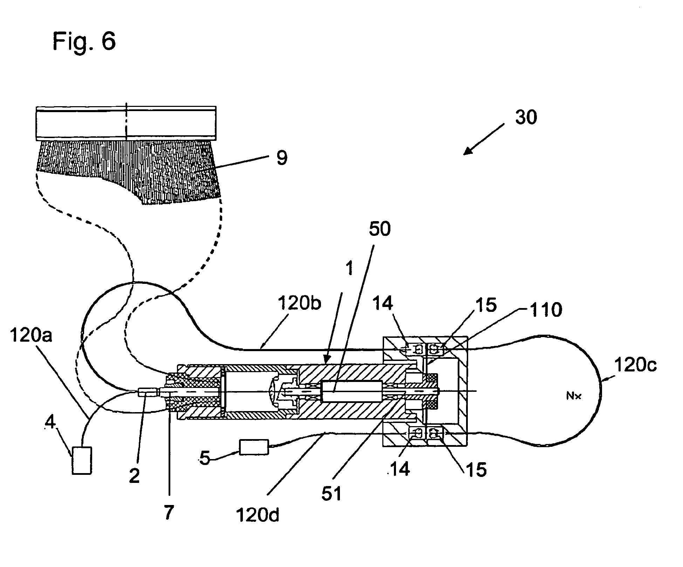

Bei dem beschriebenen Faserscanner beschränkt sich der Hauptaufwand zur Strahlteilung auf nur eine Komponente, nämlich den Koppler 2. Bei dieser Komponente ist es möglich, sie so zu dimensionieren, dass hohe optische Wirkungsgrade (>50%) hinsichtlich der optischen Transmission erreicht werden können. Berücksichtigt man bei der Dimensionierung eines derartigen Kopplers das direkte Übersprechen zwischen Sende- und Empfangszone, so ist es vorteilhaft, die Teilungsebene dieses Kopplers in den Stecker 7 zu verlegen (wie in der Ausführung nach Fig. 6 dargestellt).

Um den Detektor vor Eigenblendung durch die Lichtquelle zu schützen, ist vorteilhaft zwischen Detektor 5 und dem faseroptischen Koppler 2 ein schneller optischer Schalter 3 integriert. Dieser ist mit den gesendeten Laserimpulsen synchronisiert und ist in der Lage, die störenden Eigenblendungsreflexe zu absorbieren und das, typischerweise wesentlich schwächere, Nutzsignal zu transmittieren.

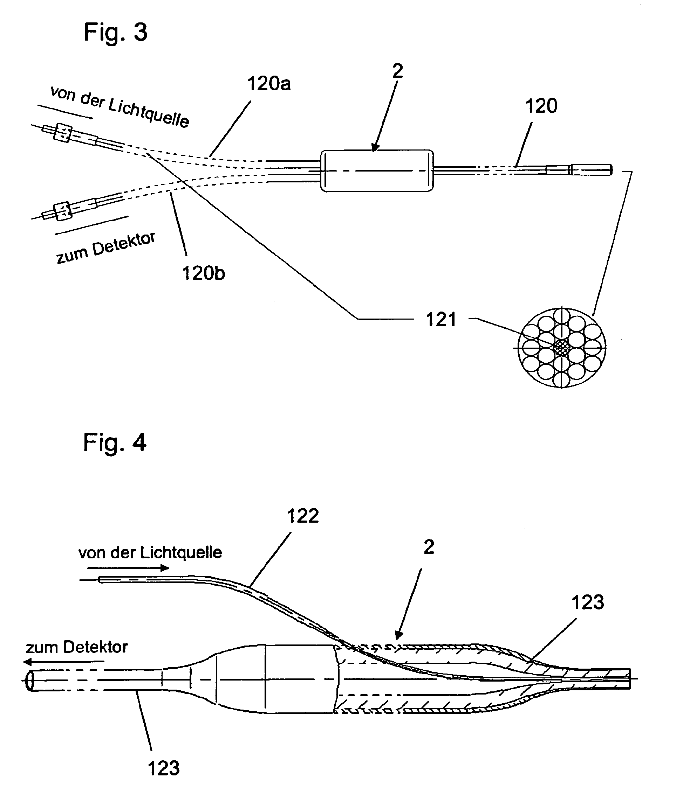

In den Fig. 3 bis 5 sind drei Beispiele für die Realisierung des faseroptischen Kopplers abgebildet.

Gemäß Fig. 3 kann der Koppler 2 dadurch erzeugt werden, dass der zentrale Lichtleiter 120 aus einem Bündel einzelner Lichtleitfasern bestehen, wobei eine zentrale Lichtleitfaser 121 den zentralen Querschnittsbereich 120a für das Senden und die umgebenden Lichtleitfasern zusammen den äußeren Querschnittsbereich 120b für den Empfang bilden. Bei dieser Ausführung kann dann die zentrale Faser 121 leicht aus dem Faserbündel 120 herausgeführt und an die Lichtquelle 4 geführt werden.

Eine andere Möglichkeit zur Realisierung des Kopplers 2 besteht darin (Fig. 4), eine einzelne zentrale Lichtleitfaser 122 in einer zentralen Bohrung innerhalb eines anderen Lichtleiters 123 anzuordnen. Das Herausführen der zentralen Lichtleitfaser 122 aus dem sie umgebenden Lichtleiter 123 kann an einer Stelle erfolgen, an dem der Durchmesser des umgebenden Lichtleiters unter Hitzeeinwirkung aufgeweitet wurde.

Der optische Wirkungsgrad der Ausführung nach Fig. 4 ist dabei höher als der gemäß Fig. 3 aufgrund der Reduktion der nichtleitenden Flächenanteile.

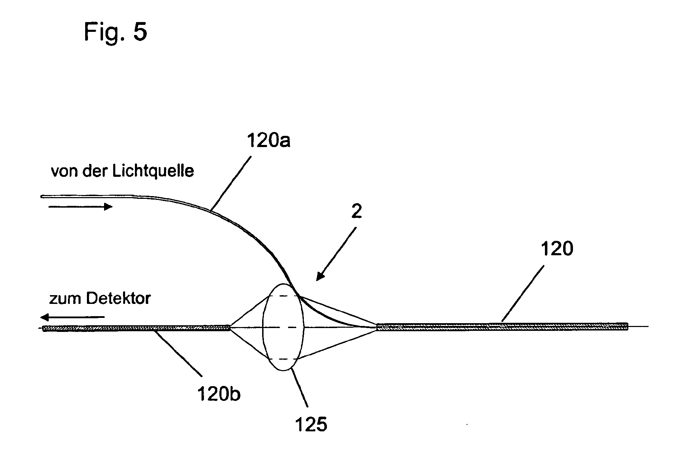

Darüber hinaus ist auch eine Aufspaltung der beiden Querschnittsbereiche für Senden und Empfang durch eine optische Abbildung möglich, wie sie Fig. 5 zeigt. Dazu ist der äußere Querschnittsbereich 120b des zentralen Lichtleiters 120 über eine bestimmte Distanz unterbrochen, wobei diese Distanz mittels einer optischen Abbildung (hier: Linse 125) überbrückt wird. An dieser Unterbrechungsstelle des äußeren Querschnittsbereichs 120a kann der zentrale Querschnittsbereich 120b herausgeführt werden.

In allen Varianten kann als zentraler Querschnittsbereich des zentralen Lichtleiters vorteilhaft eine einfache Lichtleitfaser oder ein Fasertaper verwendet werden. Letzterer erleichtert die Einkopplung der Laserleistung und kann den Teilungswirkungsgrad nochmals verbessern.

Die Aufgabe des bereits in der Ausführung nach Fig. 1 beschriebenen schnellen optischen Schalters 3 ist es, die reflektierten Störreflexe, die irgendwo im System (z.B. durch Streulicht oder durch Rückreflexe an optischen Flächen wie Linsen oder Glasfaserenden) entstehen, zum Zeitpunkt des Laserimpulses vom Detektor abzuhalten. In der Praxis bedeutet dies z.B. eine Unterbrechung einer Faserstrecke für eine Zeitspanne < 100ns mit einem Dämpfungsmaß >80dB. Als Komponenten kommen Systeme in Betracht, die in der Lage sind, die Faserstrecke zwischen dem faseroptischen Koppler und dem Detektor mit kontrollierbarer Geschwindigkeit zu unterbrechen und die dabei selbst nur minimal Streulicht erzeugen. Eine Ausführung des erfindungsgemäßen faseroptischen Scanners, welche einen besonders vorteilhaften schnellen optischen Schalter auf der Basis eines Ultrapräzisionsshutters aufweist, zeigt Fig. 6.

Der grundsätzliche Aufbau der in Fig. 6 gezeigten Ausführung entspricht demjenigen von Fig. 1 mit Faserarray 9, Zentralteil 1, Detektor 5 sowie faseroptischem Koppler 2 zur Trennung von Sendesignal und Empfangssignal. Der faseroptische Koppler 2 ist in der in Fig. 6 gezeigten Ausführung in den Stecker 7 für die Ankopplung des zentralen Lichtleiters an den Zentralteil 1 integriert.

Zur Realisierung des optischen Schalters für den Schutz des Detektors 5 wird auf das freie Wellenende des Antriebs 50 eine Aufnahme mit einer Inkremental-Unberbrecherscheibe 110 montiert Die Anzahl der Linienpaare (oder Durchbrechungen) auf der Inkremental Unberbrecherscheibe 110 entspricht der Anzahl der Fasern innerhalb des Faserarrays 9. Die Scheibe 110 unterbricht den Strahlengang der Faserstrecke 120b vom Koppler 2 zum Detektor 5. Durch die Rotation der Motorwelle 51 entstehen abwechselnd Zeitfenster, in den das Licht entweder transmittiert oder blockiert (absorbiert) wird. Da die Unberbrecherscheibe 110 auf derselben Welle wie der Drehspiegel 60 sitzt, ist eine perfekte Synchronisation möglich.

Da an der Unterbrecherstelle Streulicht entstehen kann, wird der Kontrast zwischen Transmission und Absorption reduziert. Zur Erhöhung des Kontrastes wird die zu unterbrechende Faserstrecke 120b mehrmals über die Unberbrecherscheibe 110 geführt, wo sie auf dem Scheibenumfang mehrfach synchron unterbrochen wird. In der in Fig. 6 gezeigten Ausführung wird die Faserstrecke genau zweimal an die Unberbrecherscheibe geführt.

Zur Anpassung der Schaltzeiten und zur Erhöhung des Wirkungsgrades der Transmission ist in der gezeigten Ausführung beim Durchgang durch die Unberbrecherscheibe eine Zwischenabbildung unter Einsatz von Mikrooptiken 14,15 vorgesehen. Der Abbildungsmaßstab der Zwischenabbildung wird durch eine Kombination der Mikrooptiken 14 u. 15 bestimmt und kann zwischen 1:1 und beliebig variiert werden. Als Mikrooptiken 14,15 können Gradienten-Optiken, refraktive Optiken, reflektive Optiken, diffraktive Optiken oder eine Kombination davon verwendet werden.

Die Inkrementalscheibe 110 ist präzise mit den Laserimpulsen des Senders 4 synchronisiert, wobei eine stabile Drehzahl des Motors 50 erforderlich ist. Optional kann auch der Laserimpuls der Lichtquelle 4 auf die Kante der Inkremente der Unberbrecherscheibe 110 synchronisiert werden, in dem letztere aktiv den Strahlengang der Faserstrecke 120b unterbricht.

Die in Fig. 6 gezeigte Faserstrecke 120c zur Übertragung der optischen Leistung zwischen zwei Durchgängen des Lichtsignals durch die Unterbrecherscheibe 110 kann auch durch Lichtleitstäbe oder optische Umlenkprismen ersetzt werden. Beim Einsatz solcher Komponenten müssten die Abbildungseigenschaften der MikroOptiken entsprechend angepasst werden.

Generell können als schnelle Schalter auch elektro-optische Verfahren wie Pockels- oder Kerr-Zellen eingesetzt werden. Alternativ können auch akusto-optische Systeme oder MEMS (Micro-Elektro-Mechanical System) bzw. OMEMS (Optical-Micro-Electro-Mechanical-Systems) verwendet werden. Als weitere Alternative kommen integriert optische Systeme in Frage, da sie eine ideale faseroptische Verbindung mit der zum Detektor führenden Faserstrecke 120d zulassen.

Der erfindungsgemäße faseroptische Scanner kann wesentlicher Bestandteil eines Laserradars oder einer Entfernungsbildkamera sein. Eine Entfernungsbildkamera ist ein Instrument zur Abtastung und Entfernungsvermessung eines Raumes oder einer Szene im Sehfeld der Kamera. Die Entfernungsmessung beruht auf dem Laufzeitmessprinzip mittels eines oder mehrerer Lichtquellen und Detektoren. Durch die Bestimmung des Zeitintervalls zwischen abgestrahltem und empfangenem Licht, reflektiert vom abzubildenden Objekt, und aus der Kenntnis der Lichtgeschwindigkeit können die Entfernung oder ein Entfernungswert bestimmt werden. Eine Matrix von Entfernungswerten (entsprechend dem Entfernungsbild) entsteht dadurch, dass eine punktweise Abtastung über das Blickfeld der Kamera durchgeführt wird.

Für eine zweidimensionale Abtastung der Szene können z.B. die ersten Enden 90 der Fasern des Faserarrays ein zweidimensionales Raster bilden.

Im Falle eines Zeilenscanners, also bei zeilenförmiger Anordnung der ersten Enden 90 der Fasern des Faserarrays, wird eine zusätzliche zweidimensionale Scaneinrichtung, z.B. ein schwenkbarer Spiegel, im Folgenden auch als Scanspiegel bezeichnet, benötigt (siehe DE 39 42 770 A1). Die durch die zeilenförmige Anordnung der Faserenden des Faserarrays vorgegebene zeilenförmige Abtastung wird durch die Drehbarkeit des Scanspiegels zu einer zweidimensionalen Abtastung erweitert. Dabei gehört zu jeder Winkelstellung des Drehspiegels eine bestimmte Zeile des zu generierenden Szenebilds.

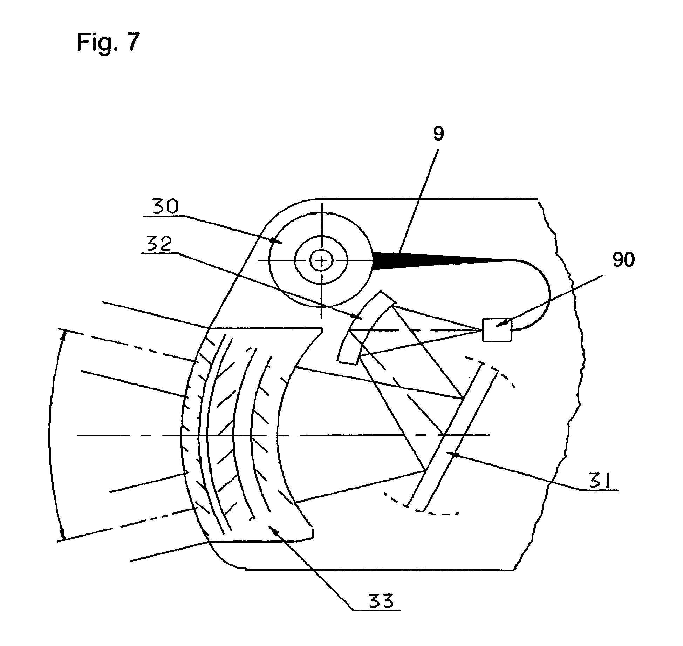

Der erfindungsgemäße Aufbau des faseroptischen Scanners ermöglicht neue Möglichkeiten zur Reduktion der Baugröße des Optikfrontends eines solchen Laserradars oder Entfernungsbildkamera. Eine besonders vorteilhafte Ausführung ist in Fig. 7 dargestellt.

Bei Einsatz des erfindungsgemäßen Faserscanners kann der Scanspiegel 31 nunmehr im konvergente beim Empfang) bzw. divergenten (beim Aussenden) Strahlengang der Abbildungsoptik angeordnet werden und verliert dadurch erheblich an Baugröße.

Wie man ebenfalls aus der Fig. 7 erkennt, kann die Abbildungsoptik vorteilhaft in mehrer Bestandteile 32,33 aufgeteilt werden. In dem gezeigten Fall umfasst die Abbildungsoptik zwei Elemente: ein erstes Element 33 an der Vorderseite des Frontends sowie ein weiteres Element 32 zwischen Scanspiegel 31 und Faserscanner 30. Bei beiden genannten Elementen der Abbildungsoptik handelt es sich vorteilhaft um ein zylindrisches, reflektierendes Bauteil. Das erste Element 33 ist vorteilhaft in die Schutzscheibe des Frontends integriert. Es umfasst in der gezeigten Ausführung mehrere Schichten. Diese können so geformt sein, dass sie zur Korrektur des anderen Elements 32 dienen können. Auch der Einsatz einer torischen Optik oder optischen Elementen mit Freiformflächen wird möglich. Mit derartigen Lösungen kann die Anzahl der erforderlichen optischen Elemente reduziert werden.

Auch der Einsatz von Zoom-Optiken wird ermöglicht. Dies erweitert die Einsatzmöglichkeiten des Laserradars, da der Operationswinkel des Laserradars flexibel an vorgegebene Aufgabenstellungen angepasst werden kann.

Der Faserscanner 30 mit Faserarray 90 und zeilenförmig angeordneten Faserenden 90 kann jetzt an beliebigem Ort zwischen den sonstigen Bauelementen integriert werden, so dass das Design des Frontends wesentlich flexibler gestaltet werden kann.

## Patentansprüche

1. Faseroptischer Scanner (30) zum Senden und Empfangen von Lichtsignalen, umfassend
- ein Array (9) aus einzelnen Lichtleitern, deren erste Enden (90) in der Bildebene einer Abbildungsoptik (8,32,33) angeordnet sind, und deren zweite Enden (70) kreisförmig angeordnet sind,
- einen zentralen Lichtleiter (120), dessen erstes Ende im Zentrum der durch die zweiten Enden (70) des Lichtleiterarrays (9) gebildeten ringförmigen Struktur angeordnet ist,
- einen motorgetriebenen Reflektor (60), der derart angeordnet ist, dass das aus den kreisförmig angeordneten Enden (70) des Lichtleiterarrays (9) austretende Licht in den zentralen Lichtleiter (120) geleitet wird,
**dadurch gekennzeichnet, dass** der zentrale Lichtleiter (120) in zwei koaxiale Querschnittsbereiche (120a,120b) geteilt ist, wobei durch den zentralen Querschnittsbereich (120a) das Sendelicht geleitet wird, und durch den äußeren Querschnittsbereich (120b) das Empfangslicht geleitet wird.

2. Faseroptischer Scanner nach Anspruch 1, **dadurch gekennzeichnet, dass** der zentrale Querschnittsbereich (120a) des zentralen Lichtleiters (120) aus einer Lichtleitfaser (121,122) oder einem Fasertaper gebildet ist.

3. Faseroptischer Scanner nach Anspruch 1 oder 2, **dadurch gekennzeichnet, dass** das zweite Ende des zentralen Lichtleiters an einen faseroptischen Koppler (2) geführt ist, in dem der zentrale Querschnittsbereich (120a) und der äußere Querschnittsbereich (120b) des zentralen Lichtleiters (120) voneinander getrennt werden.

4. Faseroptischer Scanner nach Anspruch 3, **dadurch gekennzeichnet, dass** der zentrale Lichtleiter (120) aus einem Bündel mehrerer Lichtleitfasern gebildet ist, wobei um eine zentrale Lichtleitfaser (121) des Bündels die restlichen Lichtleitfasern des Bündels angeordnet sind und die zentrale Lichtleitfaser (121) den zentralen Querschnittsbereich (120a) des zentralen Lichtleiters (120) bildet und die die zentrale Lichtleitfaser (121) umgebenden Lichtleitfasern zusammen den äußeren Querschnittsbereich (120b) des zentralen Lichtleiters (120) bilden.

5. Faseroptischer Scanner nach Anspruch 4, **dadurch gekennzeichnet, dass** am faseroptischen Koppler (2) die zentrale Lichtleitfaser (121) des Faserbündels aus dem Faserbündel herausgeführt ist.

6. Faseroptischer Scanner nach Anspruch 3, **dadurch gekennzeichnet, dass** der zentrale Lichtleiter (120) durch einen rohrförmigen Lichtleiter (123) gebildet ist, in dessen Innern eine Lichtleitfaser (122) eingesetzt ist.

7. Faseroptischer Scanner nach Anspruch 6, **dadurch gekennzeichnet, dass** am faseroptischen Koppler (2) der rohrförmige Lichtleiter (123) über eine bestimmte Distanz aufgeweitet wird, und die innere Lichtleitfaser (122) aus dem rohrförmigen Lichtleiter (123) im Bereich dieser Ausweitung herausgeführt wird.

8. Faseroptischer Scanner nach Anspruch 3, **dadurch gekennzeichnet, dass** am faseroptischen Koppler (2) der äußere Querschnittsbereich (120b) des zentralen Lichtleiters (120) über eine bestimmte Distanz unterbrochen wird, wobei diese Distanz mittels einer optischen Abbildung überbrückt wird, und der zentrale Querschnittsbereich (120a) des zentralen Lichtleiters (120) im Bereich dieser Unterbrechung aus dem äußeren Querschnittsbereich (120b) herausgeführt wird.

9. Faseroptischer Scanner nach Anspruch 3, **dadurch gekennzeichnet, dass** zwischen faseroptischem Koppler (2) und Detektor (5) ein optischer Schalter (3) geschaltet ist, der mit der Lichtquelle (4) synchronisiert ist und verhindert, dass während der Sendephase der Lichtquelle (4) Licht aus dem äußeren Querschnittsbereich (120b) des zentralen Lichtleiters (120) auf den Detektor (5) fällt.

10. Faseroptischer Scanner nach Anspruch 9, **dadurch gekennzeichnet, dass** der optische Schalter durch eine Inkremental Unberbrecherscheibe (110) gebildet wird, durch welche das Lichtsignal des äußeren Querschnittsbereichs (120b) des zentralen Lichtleiters (120) ein oder mehrmals hindurchgeführt wird.

11. Faseroptischer Scanner nach Anspruch 10, **dadurch gekennzeichnet, dass** das Lichtsignal mittels einer optischen Abbildung durch die Inkremental-Unberbrecherscheibe (110) hindurchgeführt wird.

12. Faseroptischer Scanner ach Anspruch 11, **dadurch gekennzeichnet, dass** die Inkremental-Unberbrecherscheibe auf der Welle (51) des Motors (50) für den Antrieb des Reflektors (60) sitzt.

13. Entfernungsbildkamera, umfassend
- eine Scaneinrichtung (31) zur zweidimensionalen Abtastung einer Szene,
- einen faseroptischen Scanner (30) nach einem der vorangehenden Ansprüche,
- wobei das von der Scaneinrichtung (31) kommende Licht von der Abbildungsoptik (32) auf die ersten Faserenden (90) des faseroptischen Scanners (30) abgebildet wird.

14. Entfernungsbildkamera, nach Anspruch 14, **dadurch gekennzeichnet, dass** die Abbildungsoptik aus mindestens zwei optischen Elementen (32,33) besteht.

15. Entfernungsbildkamera nach Anspruch 14, **dadurch gekennzeichnet, dass** die zweidimensionale Scaneinrichtung (31) in dem Strahlengang der Abbildungsoptik (32,33) angeordnet ist.

## Claims

1. Fiber optic scanner (30) for transmitting and receiving optical signals, comprising
- an array (9) of individual light guides whose first ends (90) are arranged in the image plane of imaging optics (8,32,33) and whose second ends (70) are arranged in circular fashion,
- a central light guide (120) whose first end is arranged at the center of the annular structure formed by the second ends (70) of the light guide array (9), and
- a motor-driven reflector (60) which is arranged in such a way that the light emerging from the circularly arranged ends (70) of the light guide array (9) is guided into the central light guide (120),
**characterized in that** the central light guide (120) is split into two coaxial cross sectional areas (120a,120b), the transmitted light being guided through the central cross sectional area (120a), and the received light being guided through the outer cross sectional area (120b).

2. Fiber optic scanner according to Claim 1, **characterized in that** the central cross sectional area (120a) of the central light guide (120) is formed from an optical guide (121,122) or a fiber taper.

3. Fiber optic scanner according to Claim 1 or 2, **characterized in that** the second end of the central light guide is led to a fiber optic coupler (2) in which the central cross sectional area (120a) and the outer cross sectional area (120b) of the central light guide (120) are separated from one another.

4. Fiber optic scanner according to Claim 3, **characterized in that** the central light guide (120) is formed from a bundle of a plurality of optical fibers, the remaining optical fibers of the bundle being arranged around a central optical fiber (121) of the bundle, and the central optical fiber (121) forming the central cross sectional area (120a) of the central light guide (120), and the optical fibers surrounding the central optical fiber (121) together forming the outer cross sectional area (120b) of the central light guide (120).

5. Fiber optic scanner according to Claim 4, **characterized in that** the central optical fiber (121) of the fiber bundle is led out of the fiber bundle at the fiber optic coupler (2).

6. Fiber optic scanner according to Claim 3, **characterized in that** the central light guide (120) is formed by a tubular light guide (123) in whose interior an optical fiber (122) is inserted.

7. Fiber optic scanner according to Claim 6, **characterized in that** the tubular light guide (123) is expanded at the fiber optic coupler (2) over a specific distance, and the inner optical fiber (122) is led out of the tubular light guide (123) in the region of this expansion.

8. Fiber optic scanner according to Claim 3, **characterized in that** the outer cross sectional area (120b) of the central light guide (120) is interrupted at the fiber optic coupler (2) over a specific distance, this distance being bridged by means of an optical projection, and the central cross sectional area (120a) of the central light guide (120) being led out of the outer cross sectional area (120b) in the region of this interruption.

9. Fiber optic scanner according to Claim 3, **characterized in that** connected between fiber optic coupler (2) and detector (5) is an optical switch (3) which is synchronized with the light source (4) and prevents light from the outer cross sectional area (120b) of the central light guide (120) falling onto the detector (5) during the transmission phase of the light source (4).

10. Fiber optic scanner according to Claim 9, **characterized in that** the optical switch is formed by an incremental interrupter disk (110) through which the optical signal of the outer cross sectional area (120b) of the central light guide (120) is led one or more times.

11. Fiber optic scanner according to Claim 10, **characterized in that** the optical signal is led through the incremental interrupter disk (110) by means of an optical projection.

12. Fiber optic scanner according to Claim 11, **characterized in that** the incremental interrupter disk is seated on the shaft (51) of the motor (50) driving the reflector (60).

13. Range imaging camera, comprising
- a scanning device (31) for the two-dimensional scanning of a scene, and
- a fiber optic scanner (30) according to one of the preceding Claims,
- the light coming from the scanning device (31) being projected by the imaging optics (32) onto the first fiber ends (90) of the fiber optic scanner (30).

14. Range imaging camera according to Claim 14, **characterized in that** the imaging optics consist of at least two optical elements (32,33).

15. Range imaging camera according to Claim 14, **characterized in that** the two-dimensional scanning device (31) is arranged in the beam path of the imaging optics (32,33).

## Revendications

1. Scanner à fibre optique (30) pour l'émission et la réception de signaux lumineux, comprenant
- un ensemble (9) de conduits de lumière individuels dont les premières extrémités (90) sont disposées dans le plan image d'une optique de reproduction (8, 32, 33), et dont les deuxièmes extrémités (70) sont disposées sous forme circulaire,
- un conduit de lumière central (120) dont la première extrémité est disposée au centre de la structure annulaire formée par les deuxièmes extrémités (70) de l'ensemble (9) de conduits de lumière,
- un réflecteur (60) motorisé disposé de telle sorte que la lumière, sortant des extrémités (70) de l'ensemble (9) de conduits de lumière disposés sous forme circulaire, est guidée dans le conduit de lumière central (120),
**caractérisé en ce que** le conduit de lumière central (120) est divisé en deux domaines à section coaxiale (120a, 120b), dans lesquels la lumière d'émission est guidée à travers le domaine à section centrale (120a) et la lumière de réception est guidée à travers le domaine à section externe (120b).

2. Scanner à fibre optique selon la revendication 1, **caractérisé en ce que** le domaine à section centrale (120a) du conduit de lumière central (120) est constitué d'une fibre conductrice de lumière (121, 122) ou d'une fibre conique.

3. Scanner à fibre optique selon la revendication 1 ou 2, **caractérisé en ce que** la deuxième extrémité du conduit de lumière central est acheminée vers un coupleur de fibre optique (2) dans lequel le domaine à section centrale (120a) et le domaine à section externe (120b) du conduit de lumière central (120) sont séparés l'un de l'autre..

4. Scanner à fibre optique selon la revendication 3, **caractérisé en ce que** le conduit de lumière central (120) est formé d'un faisceau de plusieurs fibres conductrices de lumière, les fibres conductrices de lumière restantes du faisceau étant disposées autour d'une fibre conductrice de lumière centrale (121) du faisceau et **en ce que** la fibre conductrice de lumière centrale (121) forme le domaine à section centrale (120a) du conduit de lumière central (120), et que les fibres conductrices de lumière entourant la fibre conductrice de lumière centrale (121) forment ensemble le domaine à section externe (120b) du conduit de lumière central (120).

5. Scanner à fibre optique selon la revendication 4, **caractérisé en ce que** la fibre conductrice de lumière centrale (121) du faisceau de fibres est extraite du coupleur de fibre optique (2).

6. Scanner à fibre optique selon la revendication 3, **caractérisé en ce que** le conduit de lumière central (120) est constitué d'un conduit de lumière tubulaire (123) à l'intérieur duquel est insérée une fibre conductrice de lumière (122).

7. Scanner à fibre optique selon la revendication 6, **caractérisé en ce qu'**au coupleur de fibre optique (2), le conduit de lumière tubulaire (123) s'évase sur une certaine distance et la fibre conductrice de lumière interne (122) est extraite du conduit de lumière tubulaire (123) dans le domaine de cet évasement.

8. Scanner à fibre optique selon la revendication 3, **caractérisé en ce qu'**au coupleur de fibre optique (2), le domaine à section externe (120b) du conduit de lumière central (120) est interrompu sur une certaine distance, cette distance étant pontée au moyen d'une représentation optique, et le domaine à section centrale (120a) du conduit de lumière central (120) étant extrait du domaine à section externe (120b) dans le domaine de cette interruption.

9. Scanner à fibre optique selon la revendication 3, **caractérisé en ce qu'**un commutateur optique (3) est branché entre le coupleur de fibre optique (2) et le détecteur (5), qu'il est synchronisé avec la source lumineuse (4) et qu'il empêche la lumière du domaine à section externe (120b) du conduit de lumière central (120) de tomber sur le détecteur (5) pendant la phase d'émission de la source lumineuse (4).

10. Scanner à fibre optique selon la revendication 9, **caractérisé en ce que** le commutateur optique est constitué d'un disque hacheur incrémental (110) à travers lequel le signal lumineux du domaine à section externe (120b) du conduit de lumière central (120) est acheminé une ou plusieurs fois.

11. Scanner à fibre optique selon la revendication 10, **caractérisé en ce que** le signal lumineux est acheminé à travers le disque hacheur incrémental (110) au moyen d'une représentation optique.

12. Scanner à fibre optique selon la revendication 11, **caractérisé en ce que** le disque hacheur incrémental repose sur l'arbre (51) du moteur (50) pour l'entraînement du réflecteur (60).

13. Caméra d'imagerie de distances comprenant
- un dispositif scanner (31) pour le balayage bidirectionnel d'une scène,
- un scanner à fibre optique (30) selon une des revendications précédentes,
- dans lequel la lumière provenant du dispositif scanner (31) est reproduite par l'optique de reproduction (32) sur les premières extrémités de fibres (90) du scanner à fibre optique (30).

14. Caméra d'imagerie de distances selon la revendication 14, **caractérisée en ce que** l'optique de reproduction est constituée d'au moins deux éléments optiques (32, 33).

15. Caméra d'imagerie de distances selon la revendication 14, **caractérisée en ce que** le dispositif scanner bidirectionnel (31) est disposé sur le chemin du faisceau de l'optique de reproduction (32, 33).
